# FASCICULE DE BREVET EUROPEEN

(11) **EP 0 845 615 B1**
(45) Date de publication et mention de la délivrance du brevet: **23.04.2003**
(21) Numéro de dépôt: 97402853.2
(22) Date de dépôt: 27.11.1997
(51) Int. Cl.: F16D 23/14

(54) **Dispositif débrayeur**
Kupplungsausrüstvorrichtung
Clutch release assembly

(30) Priorité: 29.11.1996 FR 9614704
(43) Date de publication de la demande: 03.06.1998
(73) Titulaire: SKF FRANCE, F-92142 Clamart Cédex (FR); VALEO, 75017 Paris (FR)
(72) Inventeur: Ponson, Frédéric, 37230 Luynes (FR); Kromwel, Jean Michel, 80000 Amiens (FR)
(74) Mandataire: Casalonga, Axel

(56) Documents cités:
- FR-A- 2 090 935
- FR-A- 2 230 896
- FR-A- 2 230 897
- FR-A- 2 234 485
- FR-A- 2 544 429
- FR-A- 2 550 294

## Description

La présente invention concerne le domaine des dispositifs débrayeurs pour embrayages à friction du type poussé, notamment pour véhicules automobiles.

De tels dispositifs comportent une butée de débrayage en appui sur l'extrémité interne d'un diaphragme troué centralement.

La butée de débrayage comporte un palier à roulement de butée usuellement à bagues concentriques et coaxiales, avec une bague tournante, profilée pour un contact local avec le diaphragme pourvu d'une partie périphérique externe en forme de rondelle Belleville prolongée radialement vers l'intérieur par une partie centrale fragmentée en doigts radiaux séparés deux à deux par des fentes borgnes, dont le fond ou extrémité externe est constitué par des orifices élargis implantés à la périphérie interne de la rondelle Belleville du diaphragme de forme tronconique à l'état libre. Les fentes débouchent intérieurement dans le trou central du diaphragme. La bague tournante agit sur l'extrémité interne des doigts du diaphragme et présente une partie bombée, lorsque les doigts du diaphragme sont plans et une forme annulaire plane lorsque les doigts du diaphragme sont bombés à leur extrémité interne.

La bague non tournante est, pour la manoeuvre du palier à roulement, attelée axialement à un élément de manoeuvre présentant un manchon central monté sur un tube-guide en vue du déplacement axial de l'élément de manoeuvre par rapport au tube-guide traversé par un arbre mené, tandis que le diaphragme est solidaire en rotation d'un arbre menant. L'élément de manoeuvre porte ainsi la butée de débrayage.

La bague non tournante du palier à roulement peut être fixe radialement par rapport à l'élément de manoeuvre en étant, par exemple emmanchée à force sur l'extrémité avant du manchon de l'élément de manoeuvre. En variante, le palier à roulement peut se déplacer radialement par rapport à l'élément de manoeuvre, la butée étant alors appelée butée de débrayage autocentreuse. Les moyens d'attelage de la bague non tournante à l'élément de manoeuvre comportent alors, par exemple, des moyens élastiques à action axiale tels qu'une rondelle élastique du type rondelle Belleville ou du type rondelle ondulée. En variante il peut s'agir de crochets ou d'une rondelle déformable radialement à la manière d'un circlips.

Les moyens élastiques prennent appui directement sur l'élément de manoeuvre ou sur un capot solidaire par sertissage ou encliquetage dudit élément de manoeuvre pour agir sur la bague non tournante et solliciter celle-ci en contact avec un épaulement solidaire de l'élément de manoeuvre.

On peut également prévoir un dispositif d'autocentrage par un manchon en matière élastique à action radiale interposé radialement entre la bague non tournante et l'élément de manoeuvre.

L'élément de manoeuvre est conformé pour être soumis à l'action de moyens de commande en déplacement du type mécanique, hydraulique ou électromécanique. Ces moyens de commande permettent de déplacer axialement la butée de débrayage par rapport au tube-guide.

Par exemple, le tube-guide est fixé directement sur une partie fixe telle que le carter de la boîte de vitesses et le manchon de l'élément de manoeuvre porte au niveau de son extrémité arrière un flasque transversal, revêtu éventuellement d'une plaque d'appui, sur lequel agissent les doigts d'une fourchette de débrayage actionnée par la pédale de débrayage avec intervention d'un ressort, dit de précharge, dans la chaîne cinématique allant de la pédale à la fourchette. Ce ressort de précharge permet de maintenir la butée de débrayage en appui constant sur le diaphragme pour réduire l'usure et augmenter la durée de vie du roulement. En manoeuvrant la fourchette, on déplace axialement l'élément de manoeuvre le long du tube-guide de sorte que la butée de débrayage agit en poussant sur l'extrémité interne des doigts du diaphragme, celui-ci ramenant la butée à sa position initiale dès que l'on cesse d'agir sur la pédale de débrayage. En variante, le manchon de l'élément de manoeuvre peut consister en un piston d'une commande hydraulique comprenant une partie fixe, par exemple fixée sur le carter de la boîte de vitesse et définissant une cavité borgne à l'intérieur de laquelle se déplace de manière étanche le piston.

En variante, le tube-guide est fileté et coopère avec le manchon de l'élément de manoeuvre formant écrou en étant monté sur le tube-guide formant vis. Ce tube est mobile en rotation et est fixe axialement, tandis que le manchon est fixe en rotation, par exemple à l'aide de languettes élastiques reliant le manchon à un boîtier fixe, et est mobile en translation. Le tube-guide est alors porté par le boîtier fixe par l'intermédiaire d'un roulement. A l'aide d'un câble, on déplace en rotation le tube-guide et en translation le manchon. Le tube-guide peut également être entraîné en rotation par un moteur électrique solidaire d'une partie fixe.

Lors de sa fabrication, le diaphragme subit des opérations mécaniques de découpe et de mise en forme conique ainsi que des opérations de traitement thermique, notamment de trempe, afin de lui conférer la forme voulue ainsi que la dureté et l'élasticité recherchées. Il en résulte certains défauts géométriques, et en pratique les extrémités des doigts du diaphragme ne sont pas toutes dans le même plan.

Le document FR-A-2 234 485 (RANSOME HOFFMANN POLLARD) concerne un embrayage classique dans lequel le diaphragme est monté sous contrainte et prend appui sur un appui primaire porté par le fond troué centralement d'un couvercle de forme creuse fixé, par exemple par des vis, à un volant d'entraînement solidaire en rotation d'un arbre menant. L'appui primaire est de forme annulaire et est réalisé par emboutissage du fond du couvercle ou en variante consiste en un jonc porté par des colonnettes fixées par rivetage au fond du couvercle et traversant chacune un orifice élargi du diaphragme pour porter un jonc, formant appui secondaire, disposé en regard de l'appui primaire en étant interposé entre les têtes des colonnettes et le diaphragme du côté de celui-ci, tourné à l'opposé du fond du couvercle.

En variante, les colonnettes sont remplacées par des pattes issues par découpe et pliage du fond du couvercle. Les pattes traversent des orifices élargis du diaphragme et sont repliées à leur extrémité libre radialement vers l'extérieur pour former un coude de calage pour une couronne-jonc présentant une partie arrondie pour contact avec la face du diaphragme tournée à l'opposé du fond du couvercle et former ainsi l'appui secondaire. La périphérie interne de la rondelle Belleville est montée de manière basculante entre les appuis primaire et secondaire implantés en vis-à-vis. La périphérie externe de la rondelle Belleville s'appuie sur un bossage fragmenté que présente la face dorsale d'un plateau de pression lié en rotation au couvercle tout en étant mobile axialement par rapport au couvercle, généralement grâce à des languettes élastiques d'orientation tangentielle.

Des garnitures de friction d'un disque de friction sont interposées axialement entre le volant d'entraînement et la face frontale du plateau de pression. A sa périphérie interne le disque de friction présente un moyeu pour son calage en rotation sur un arbre mené. Dans le cadre d'une application pour véhicule automobile, l'arbre mené est l'arbre d'entrée de la boîte de vitesses, et l'arbre menant est le vilebrequin du moteur du véhicule sur lequel se fixe le volant d'entraînement.

Lorsque l'embrayage est engagé, le diaphragme prend appui sur l'appui primaire et sur le bossage du plateau de pression pour solliciter celui-ci en direction du volant et serrer les garnitures de friction. Le couple est ainsi transmis de l'arbre menant à l'arbre mené. Pour désengager l'embrayage et interrompre la transmission de couple, on désactive les moyens . de commande en déplaçant l'élément de manoeuvre de sorte que la bague tournante pousse sur le diaphragme. Ce dernier prend alors appui sur son appui secondaire et bascule de sorte que la charge qu'il exerce sur le plateau de pression diminue progressivement puis s'annule. Les languettes élastiques rappellent le plateau de pression en direction du fond du couvercle pour libérer les garnitures de friction. Les colonnettes ou les pattes sont donc sollicitées à chaque opération de débrayage.

Dans certains cas, on a constaté, malgré le ressort de rappel, la présence d'une rotation relative entre le diaphragme, et la butée de débrayage entraînant des phénomènes d'usure, notamment au niveau des doigts du diaphragme de dureté inférieure à celle de la bague tournante.

Le document FR-A-2 234 485 propose de réaliser un entraînement positif entre la bague tournante de la butée de débrayage, portée par le couvercle de l'embrayage, et le diaphragme. La bague tournante est montée sur ou dans un manchon fixé sur le couvercle à l'aide des colonnettes et présente deux saillies diamétralement opposées, qui pénètrent chacune dans une fente du diaphragme. Il en résulte certains inconvénients car la butée de débrayage n'est plus de type standard, le couvercle de l'embrayage subit des contraintes supplémentaires et des problèmes d'équilibrage dynamique de l'embrayage apparaissent du fait que le couvercle porte la butée de débrayage. La bague tournante du roulement doit être relativement massive du fait qu'elle est montée solidaire d'un manchon porteur et subit des contraintes supplémentaires, notamment lorsqu'elle coulisse axialement par rapport au manchon. On peut difficilement utiliser dans ce type de dispositif une bague intérieure tournante en contact direct avec le diaphragme sauf à retrouver les inconvénients mentionnés plus haut et à donner à ladite bague, et donc à la butée, un encombrement axial important. Enfin, les saillies ont une largeur non négligeable qui conditionne la largeur des fentes du diaphragme.

La présente invention a pour objet de remédier à ces différents inconvénients et de proposer un dispositif de débrayage simple et économique.

La présente invention a pour objet, notamment de proposer un dispositif de débrayage dans lequel la bague tournante, de faible épaisseur, est en contact direct et permanent en toute circonstance avec le diaphragme, celui-ci étant pourvu de fentes dont la largeur est indépendante de la butée.

Le dispositif de débrayage, selon l'invention, comprend un diaphragme pourvu d'un trou central et découpé en doigts orientés radialement vers l'intérieur, un palier à roulement de butée et un élément de manoeuvre monté sur une partie distincte de celle supportant le diaphragme et en contact au moins axial avec le palier à roulement. Le palier à roulement comprend une bague tournante dont une portion radiale est en appui sur l'extrémité interne des doigts du diaphragme, une bague non tournante dont une portion radiale est en contact avec l'élément de manoeuvre, et une rangée d'éléments roulants. La bague tournante est réalisée en tôle emboutie et comprend sur sa portion radiale en contact avec le diaphragme, au moins une déformation axiale obtenue sans enlèvement de matière, et dont les bords sont capables de coopérer avec les flancs d'un doigt du diaphragme, la déformation étant de dimension inférieure à l'épaisseur d'un doigt du diaphragme.

La déformation axiale pourra être obtenue par exemple au moyen d'une presse.

Grâce à l'invention, on obtient un dispositif de débrayage qui ménage le couvercle de l'embrayage, et on peut utiliser une butée de débrayage de type standard du fait que l'élément de manoeuvre n'est pas porté par la même partie que le diaphragme. Seule la bague tournante du palier à roulement est modifiée, et ce de manière économique car, d'une part, la bague tournante est de faible épaisseur et, d'autre part, les déformations sont de faibles dimensions axiales. Les déformations sont réalisées sans enlèvement de copeaux, ce qui peut être réalisé aisément et de façon économique durant le processus d'emboutissage à la presse de la bague. L'invention tire parti des défauts géométriques des doigts du diaphragme qui permettent d'utiliser des déformations de faibles dimensions. La déformation viendra en prise avec le flanc de l'un des doigts du diaphragme le plus décalé axialement par rapport aux autres.

En outre, le nombre de déformations nécessaires est très faible du fait qu'une fois la liaison positive en rotation établie entre le diaphragme et la bague tournante de la butée, cette liaison aura tendance à se renforcer avec la durée de fonctionnement de la butée.

En effet, à chaque manoeuvre de l'embrayage, il se produit un léger glissement radial relatif entre les doigts du diaphragme et la bague tournante de la butée. La légère usure qui en résulte produira à la longue une légère incrustation des doigts du diaphragme sur la bague de la butée, renforçant ainsi la liaison en rotation entre ces pièces.

Ce phénomène d'incrustation est rendu possible du fait que les doigts du diaphragme ont une dureté non négligeable, bien qu'inférieure à celle de la bague tournante qui a une faible épaisseur.

De même, une bague tournante en tôle emboutie présente une certaine aptitude à des microdéformations locales sous l'action des doigts du diaphragme lors des manoeuvres de débrayage ce qui favorise également le phénomène d'incrustation.

Par exemple, la déformation peut consister en un repoussage de matière vers l'intérieur, en direction des éléments roulants du palier à roulement. Ce repoussage de matière conduit à la formation d'une dépression en forme de rainure radiale avec des bords latéraux parallèles aux flancs latéraux d'un doigt du diaphragme, la largeur de la rainure étant légèrement supérieure à celle d'un doigt du diaphragme.

Au montage, on amène en contact la butée sur le diaphragme dans n'importe quelle position circonférentielle, et toute rotation relative du diaphragme par rapport à la butée conduit à ce que l'un des doigts, qui fait partie de ceux les plus décalés axialement par rapport aux autres, vient en prise dans la dépression en entraînant une liaison positive en rotation entre le diaphragme et la butée de débrayage.

En variante, le repoussage de matière peut s'effectuer vers l'extérieur, en direction opposée aux éléments roulants dudit palier et conduire à la formation d'une protubérance axiale propre à venir en prise avec un bord de l'un des doigts les plus décalés axialement pour liaison positive en rotation entre le diaphragme et la butée. Cette protubérance pourra, par exemple, former un picot radialement de forme oblongue et de largeur inférieure à celle d'une fente formant un espace circonférentiel séparant deux doigts adjacents du diaphragme.

La protubérance peut également être obtenue par un crevé de la tôle conduisant à la formation d'une patte inclinée dont l'arête radiale est en saillie.

Le diaphragme peut présenter des fentes de largeur constante en-deçà des orifices élargis, ou des fentes de largeur réduite à son extrémité interne pour augmenter la surface de contact du diaphragme et de la bague tournante.

L'invention est donc d'un emploi universel du fait que la déformation est réalisée sans enlèvement de matière et à partir d'une bague emboutie de faible épaisseur. En effet, même dans le cas où la déformation de matière s'effectue vers l'extérieur, on peut aisément contrôler celle-ci pour qu'elle soit inférieure à la largeur d'une fente de largeur réduite. C'est pour cette raison que la déformation se présente, dans ce cas, sous la forme d'un picot ou d'un crevé.

Ainsi qu'on l'aura compris, le repoussage de matière est réalisé avant les opérations de traitement thermique de la bague tournante destinées à lui conférer la dureté recherchée.

Dans un mode de réalisation de l'invention, on prévoit que la déformation est de hauteur axiale inférieure à la moitié de l'épaisseur d'un doigt du diaphragme.

Avantageusement, deux déformations diamétralement opposées sont prévues. On peut aussi prévoir trois déformations régulièrement réparties circonférentiellement. D'une manière générale, le nombre des déformations est largement inférieur au nombre de fentes du diaphragme.

Le dispositif suivant l'invention pourra avantageusement être utilisé en combinaison avec un système de rattrapage d'usure de l'embrayage qui garantira le maintien d'une plage dimensionnelle stable des fentes séparant circonférentiellement les doigts du diaphragme quelle que soit l'usure de l'embrayage.

L'élément de manoeuvre peut présenter un manchon central pour coulissement axial le long d'un tube guide solidaire d'une partie fixe, par exemple le carter de la boîte de vitesses distinct du bloc moteur portant le diaphragme. En variante, le manchon peut former un écrou entraîné en translation par le tube-guide formant vis lui-même monté rotatif.

L'élément de manoeuvre peut être actionné mécaniquement par exemple par un câble ou une fourchette, hydrauliquement en formant dans ce cas un piston ou de manière électromécanique.

Ces différentes variantes sont possibles car l'élément de manoeuvre est conformé pour être monté sur une partie distincte de celle portant le diaphragme. Bien entendu, la bague tournante peut être la bague intérieure ou extérieure du roulement de butée.

L'invention sera mieux comprise à l'étude de la description détaillée de modes de réalisation pris à titre d'exemples nullement limitatifs et illustrés par les dessins annexés, sur lesquels :
la figure 1 est une vue de face en élévation d'un diaphragme;
la figure 2 est une vue en coupe axiale du diaphragme de la figure 1;
la figure 3 est une demi-vue en coupe axiale d'un dispositif de débrayage selon l'invention;
la figure 4 est une vue de détail de la figure 3;
la figure 5 est une vue de face du dispositif de débrayage de la figure 3, sur laquelle seuls les deux doigts du diaphragme qui coopèrent avec des creux de la bague tournante sont représentés;
la figure 6 est une vue en coupe axiale d'un dispositif de débrayage selon un second mode de réalisation de l'invention;
la figure 7 est une vue de face du dispositif de débrayage de la figure 6, sur laquelle seuls deux doigts du diaphragme ont été représentés;
la figure 8 est une vue en coupe axiale d'un dispositif de débrayage selon un troisième mode de réalisation de l'invention;
la figure 9 est une vue de face du dispositif de la figure 8, sur laquelle seuls deux doigts du diaphragme ont été représentés; et
la figure 10 est une demi-vue en coupe axiale d'un dispositif de débrayage selon un quatrième mode de réalisation de l'invention.

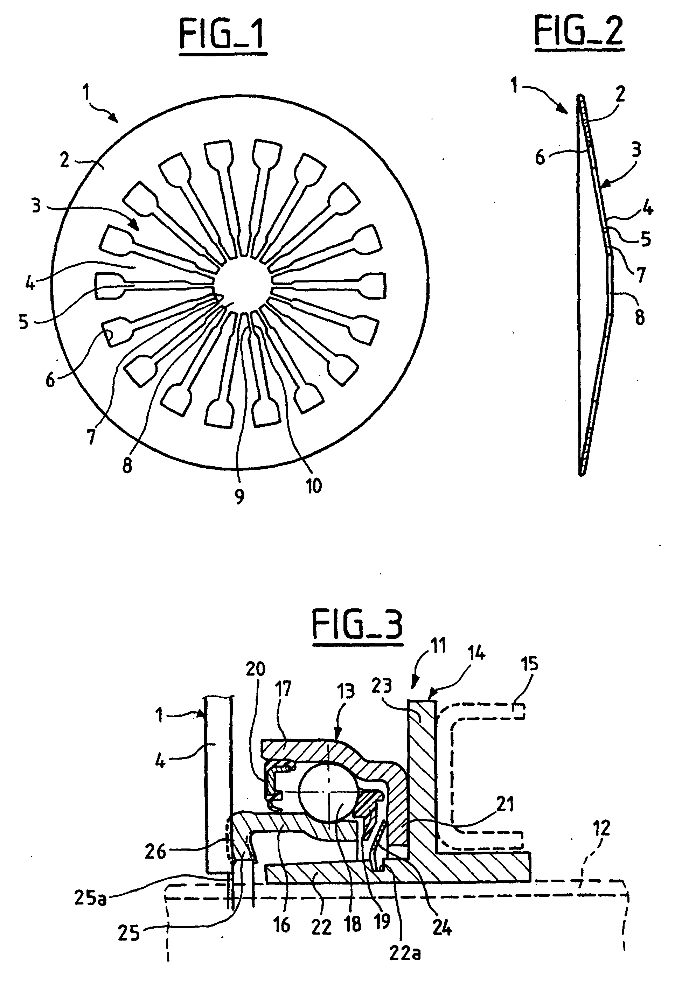

Comme on peut le voir sur les figures 1 et 2, le diaphragme 1 comprend une partie périphérique externe 2 en forme de rondelle Belleville tronconique à l'état libre, et une partie centrale 3 située dans le prolongement radial vers l'intérieur de la partie externe 2, et qui est circulairement fragmentée (découpée) en doigts radiaux 4 par des saignées formant des fentes 5. Chaque fente 5 s'étend d'une extrémité externe borgne 6 élargie implantée à la périphérie interne de la partie périphérique 2, à une extrémité interne ouverte 7, qui est de largeur circonférentielle réduite, et débouche dans un trou central 8 commun à toutes les fentes 5.

La largeur réduite des fentes 5 au niveau de leur extrémité ouverte 7 est obtenue, par exemple par des opérations de tranchage. On peut réaliser en deux opérations distinctes les deux bords radiaux 9 et 10 d'une telle fente 5, à savoir, une première opération de tranchage au cours de laquelle on réalise d'abord l'un des bords 9, 10 en question, puis une deuxième opération de tranchage au cours de laquelle on réalise l'autre desdits bords appelés par la suite flancs 4a.

Pour des raisons de clarté des dessins, les doigts 4 du diaphragme 1 tels que représentés sur la figure 2 sont tous situés sur une même surface de révolution tronconique. Toutefois, un diaphragme 1 réel aura des doigts 4 plus ou moins décalés axialement dans une direction ou une autre compte tenu du mode de fabrication précité du diaphragme.

Tel qu'illustré sur les figures 3 à 5, le dispositif de débrayage comprend un diaphragme 1, une butée d'embrayage 11 et un tube-guide 12 partiellement représenté. La butée 11 est montée coulissant axialement sur un tube-guide 12 monté sur le carter de boîte de vitesses, non représenté, et donc sur une partie distincte de celle portant le diaphragme. La butée 11 comprend un palier à roulement de butée 13, un élément de manoeuvre 14 soumis à l'action d'un organe de commande 15, ici une fourchette de débrayage. Le roulement de butée 13 comprend une bague intérieure tournante 16, réalisée en tôle mince, et une bague extérieure non tournante 17 également réalisée en tôle mince, entre lesquelles est disposée une rangée d'éléments roulants, par exemple des billes 18 maintenue par une cage 19. Un joint d'étanchéité 20 est emmanché sur un alésage de la bague extérieure 17 du côté du diaphragme 1. La bague extérieure 17 comprend du côté opposé au diaphragme 1, une portion radiale 21.

L'élément de manoeuvre 14 comprend une portion cylindrique 22 et une collerette radiale 23 dirigée vers l'intérieur contre laquelle viennent porter, d'un côté la portion radiale 21 de la bague extérieure 17, et de l'autre côté l'organe de commande 15 par l'intermédiaire des doigts de la fourchette de débrayage. La bague extérieure 17 du roulement de butée 13 est maintenue en contact avec ladite collerette radiale 23 par une rondelle biconique 24 dont le bord externe porte sur la portion radiale 21 de la bague externe 17 et dont le bord interne, découpé en languettes, est logé dans une rainure 22a de la portion cylindrique 22 de l'élément de manoeuvre 14, pour assurer ainsi l'appui axial du roulement de butée 13 contre l'élément de manoeuvre 14.

Grâce à un jeu radial contre les bagues 16, 17 du roulement de butée et la portion 22 de l'élément de manoeuvre 14, le roulement de butée peut se déplacer radialement de façon contrôlée par rapport à l'élément de manoeuvre 14 et venir ainsi s'autocentrer en fonctionnement par rapport au diaphragme.

La bague intérieure tournante 16 du roulement de butée 13 comprend, à son extrémité dirigée vers le diaphragme 1, une portion radiale 25 pourvue sur son bord extérieur d'une surface arrondie convexe 25a en contact avec l'extrémité des doigts 4 du diaphragme 1. Sur la surface convexe 25a de la portion radiale 25, on effectue deux déformations diamétralement opposées formant des dépressions 26 en forme de rainures radiales. La déformation est effectuée par repoussage de la matière vers l'intérieur formant la portion radiale 25 sur une faible épaisseur. La profondeur de la dépression 26 est largement inférieure à la moitié de l'épaisseur d'un doigt 4 du diaphragme 1. Dès qu'une rotation se produit entre la butée 11 et le diaphragme 1, un doigt 4 de ce dernier vient se loger dans la dépression 26 et empêche toute rotation relative ultérieure de la butée 11 et du diaphragme 1.

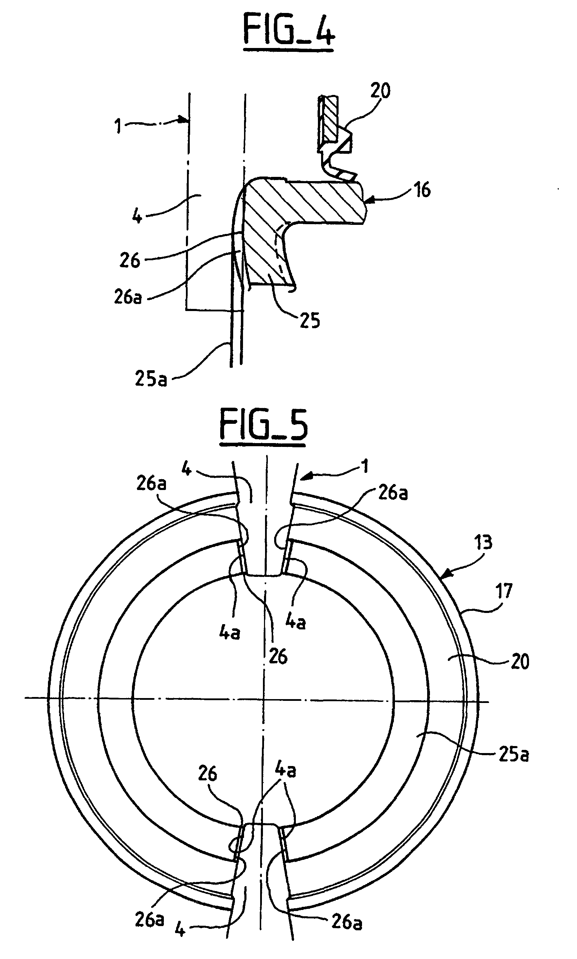

Comme on le voit plus particulièrement sur la figure 5, les flancs 4a des doigts 4 peuvent entrer en contact avec les bords 26a des dépressions 26. En pratique, en raison des tolérances de fabrication, il se peut que seul un des bords 26a entre en contact avec un flanc 4a d'un doigt 4. Dans tous les cas, le diaphragme 1 et la bague tournante 16 sont solidaires en rotation.

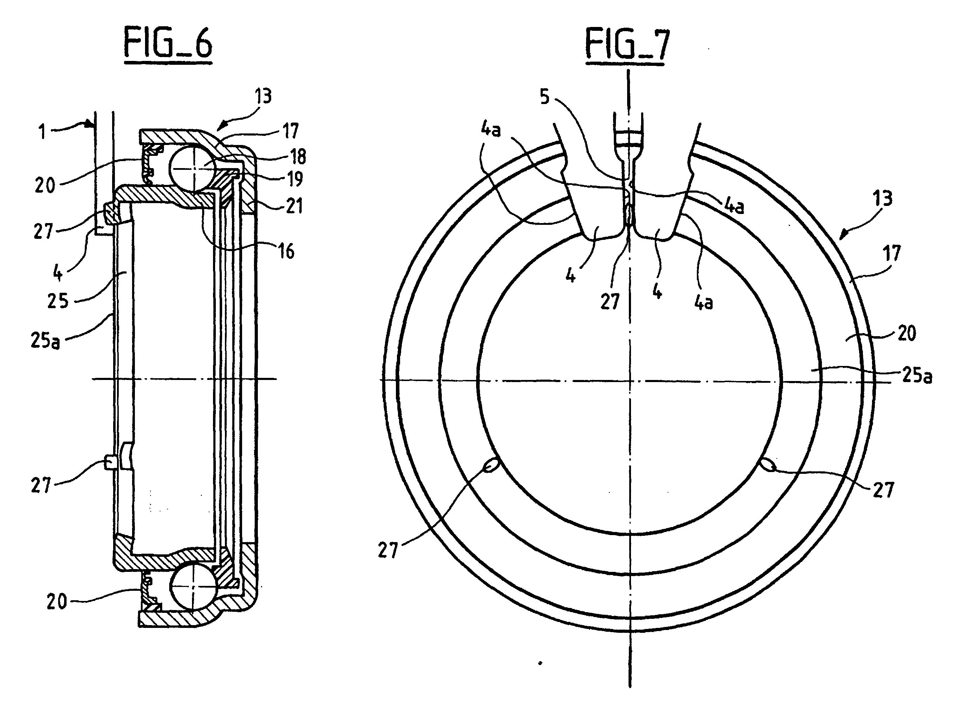

Le mode de réalisation illustré sur les figures 6 et 7 est semblable à celui des figures précédentes à ceci près que, au lieu des creux, la bague intérieure tournante 16 comprend trois protubérances 27 en saillie et en forme de picots entre deux doigts 4 adjacents du diaphragme 1. Les protubérances 27 sont radialement de forme oblongues et de très faibles dimensions circonférentielles de façon à venir se loger dans l'une quelconque des fentes 5 séparant les doigts 4 du diaphragme 1. Les protubérances 27 sont d'épaisseur inférieure à celle des doigts 4 du diaphragme 1 en étant radialement de forme oblongue pour un bon contact avec lesdits doigts.

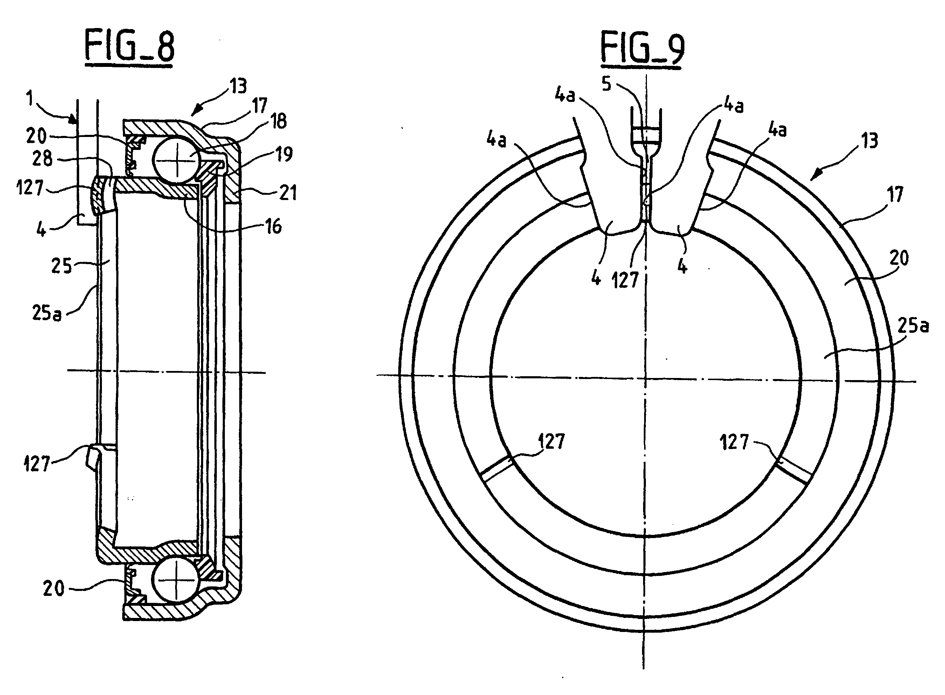

Le mode de réalisation illustré sur les figures 8 et 9 est semblable à celui des figures 6 et 7 à ceci près que les protubérances 127 sont obtenues au moyen de crevés de la tôle conduisant à la formation de pattes inclinées 27 dont l'arête radiale est en saillie et est adaptée à venir en prise avec l'un des flancs 4a d'un doigt 4 en étant parallèle audit flanc 4a. Ainsi qu'on l'aura compris, dans les figures 6 à 9, on repousse la matière vers l'extérieur sans enlèvement de copeaux et les protubérances 27, 127 sont parallèles aux flancs 4a.

Dans les figures 3 à 5 on repousse la matière vers l'intérieur sans enlèvement de copeaux, et les bords 26a des dépressions sont parallèles aux flancs 4a.

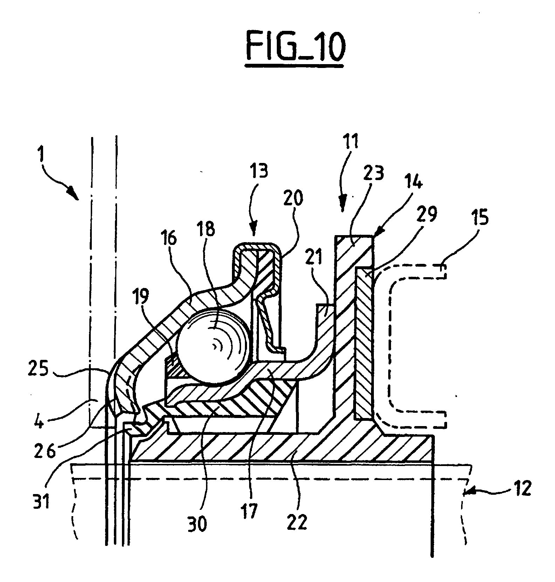

Bien entendu, on put inverser les structures, ainsi sur la figure 10, le dispositif de débrayage comprend un diaphragme 1 identique à celui des figures 1 et 2 et une butée 11 légèrement différente de celle des figures 3 à 5, en ce sens qu'elle comprend un roulement de butée 13 pourvu d'une bague tournante 16 extérieure, et d'une bague non tournante 17 intérieure , entre lesquelles est disposée une rangée de billes 18. La bague tournante 16 supporte, du côté de l'élément de manoeuvre 14, un joint d'étanchéité 20. A son extrémité opposée, la bague tournante 16 comprend une portion radiale 25 arrondie et en contact avec les doigts 4 du diaphragme 1. Plusieurs dépressions 26 sont prévues par repoussage de la matière formant la portion radiale 25. Un doigt 4 peut venir se loger dans chaque dépression 26.

L'élément de manoeuvre 14, réalisé en matériau synthétique, est pourvu sur sa collerette radiale 23 dirigée vers l'extérieur, d'une plaque métallique de renforcement 29 en contact avec l'organe de commande 15 qui se présente également sous forme d'une fourchette de débrayage. Entre la portion tubulaire 22 de l'élément de manoeuvre 14 et la bague non tournante 17, est disposé radialement un organe élastique d'autoalignement 30 autorisant le déplacement radial du roulement 13 par rapport à l'élément de manoeuvre 14 et son autocentrage par rapport au diaphragme. L'organe élastique d'autoalignement 30 fait saillie axialement au-delà de l'extrémité de la bague non tournante 17, en direction de la bague tournante 16 pour former un joint labyrinthe 31. Bien entendu, la présente invention n'est pas limitée aux exemples de réalisation décrits.

En particulier, les protubérances 27, 127 peuvent être de hauteur axiale différente de sorte que les doigts du diaphragme les plus saillants axialement ne coopèrent pas forcément avec les protubérances.

D'autre part, dans un mode de réalisation du type de celui des figures 3 à 5, on peut prévoir trois dépressions réparties à 120° les unes par rapport aux autres.

Grâce à l'invention, on obtient un dispositif de débrayage économique dont le palier à roulement et le diaphragme ont une durée de vie prolongée du fait de la liaison en rotation du diaphragme avec la bague tournante et qui sollicite moins le carter d'embrayage, tout en convenant à n'importe quel type de diaphragme notamment intérieurement, le dispositif débrayeur suivant l'invention pouvant fonctionner avec un diaphragme à fentes de largeur réduite.

Ainsi qu'on l'aura compris, en dotant l'embrayage d'un dispositif compensant l'usure de ses garnitures de friction appelé dispositif à rattrapage d'usure, on garantit que le diaphragme est toujours dans la même position à l'état d'embrayage engagé et qu'en aucun cas, la largeur des fentes ne puisse diminuer de façon telle que les extrémités des doigts du diaphragme puissent venir pincer les déformations lorsque celles-ci consistent en un repoussage de matière vers l'extérieur.

On notera que la forme oblongue des picots ou des pattes inclinées permet l'obtention d'une bonne portée de contact avec les doigts du diaphragme.

## Revendications

1. Dispositif de débrayage comprenant un diaphragme (1) troué centralement, comportant une partie centrale découpée, à la faveur de fentes (5), en doigts (4) orientés radialement vers l'intérieur, un palier à roulement de butée (13) et un élément de manoeuvre (14) monté sur une partie distincte de celle supportant le diaphragme et en contact au moins axial avec le palier à roulement, ledit palier à roulement comprenant une bague tournante (16) dont une portion radiale est en appui sur l'extrémité interne des doigts du diaphragme, une bague non tournante (17) dont une portion radiale est en contact avec l'élément de manoeuvre, et une rangée d'éléments roulants (18), **caractérisé par le fait que** la bague tournante, réalisée en tôle emboutie, comprend sur sa portion radiale en contact avec le diaphragme, au moins une déformation axiale obtenue sans enlèvement de matière, et dont les bords sont capables de coopérer avec les flancs d'un doigt du diaphragme, la déformation étant de dimension inférieure à l'épaisseur d'un doigt du diaphragme.

2. Dispositif selon la revendication 1, **caractérisé par le fait que** la déformation est réalisée par repoussage de matière vers l'intérieur, en direction des éléments roulants (18) dudit palier conduisant à la formation d'une dépression (26).

3. Dispositif selon la revendication 2, **caractérisé par le fait que** la dépression (26) forme une rainure radiale de largeur circonférentielle supérieure à celle d'un doigt du diaphragme.

4. Dispositif selon la revendication 1, cractérisé par le fait que la déformation est réalisée par repoussage de matière vers l'extérieur, en direction opposée aux éléments roulants (18) dudit palier, conduisant à la formation d'une protubérance (27, 127).

5. Dispositif selon la revendication 4, **caractérisé par le fait que** la déformation forme une protubérance (27, 127) de dimension inférieure à l'espace circonférentiel séparant deux doigts adjacents du diaphragme.

6. Dispositif selon la revendication 5, **caractérisé en ce que** la déformation consiste en un picot (27) radialement de forme oblongue.

7. Dispositif selon la revendication 5, **caractérisé en ce que** la déformation (127) consiste en une patte inclinée avec une arête radiale parallèle au flanc (4a) d'un doigt (4) du diaphragme (1).

8. Dispositif selon l'une quelconque des revendicatons 5 à 7, **caractérisé en ce que** les protubérances (27, 127) sont de hauteurs axiales différentes.

9. Dispositif selon l'une quelconque des revendications précédentes, **caractérisé par le fait que** les bords (26a) de la déformation sont parallèles aux flancs (4a) du doigt (4) correspondant.

10. Dispositif selon l'une quelconque des revendications précédentes, **caractérisé par le fait que** la déformation est de hauteur axiale inférieure à la moitié de l'épaisseur d'un doigt du diaphragme.

11. Dispositif selon l'une quelconque des revendications précédentes, **caractérisé par le fait que** la bague tournante comprend deux déformations diamétralement opposées.

12. Dispositif selon l'une quelconque des revendications 1 à 11, **caractérisé par le fait que** la bague tournante comprend trois déformations régulièrement espacées l'une de l'autre dans le sens circonférentiel.

13. Dispositif selon l'une quelconque des revendications précédentes, **caractérisé par le fait que** l'élément de manoeuvre est monté coulissant sur un tube guide.

## Patentansprüche

1. Ausrückvorrichtung, zu der gehören: eine mit einer Zentralöffnung versehene Membranfeder (1), die einen mittleren Abschnitt aufweist, der durch Schlitze (5) in Finger (4) aufgeschnitten ist, die in radialer Richtung nach innen ausgerichtet sind, ein Ausrück-Wälzlager (13) und ein Betätigungselement (14), das auf einem von dem Teil, auf dem die Membranfeder befestigt ist, verschiedenen Teil angebracht ist und das zumindest in axialer Richtung mit dem Wälzlager in Berührung steht, wobei das Wälzlager einen umlaufenden Ring (16), der mit einem radialen Abschnitt an dem inneren Ende der Finger der Membranfeder anliegt, einen stillstehenden Ring (17), der mit einem radialen Abschnitt mit dem Betätigungselement in Berührung steht, und eine Reihe von Wälzkörpern (18) aufweist, **dadurch gekennzeichnet, dass** der aus umgeformtem Blech hergestellte umlaufende Ring auf dessen radialen Abschnitt, der mit der Membranfeder in Berührung steht, wenigstens eine axiale Verformung aufweist, die ohne Entfernen von Werkstoff erzeugt ist und deren Ränder in der Lage sind, mit den Flanken eines Fingers der Membranfeder zusammenzuwirken, wobei die Abmessung der Verformung geringer ist als die Dicke eines Fingers der Membranfeder.

2. Vorrichtung nach Anspruch 1, **dadurch gekennzeichnet, dass** die Verformung durch Zurückdrängen von Material in Richtung der Wälzkörper (18) des Lagers nach innen erzeugt wird, was zu einer Ausbildung einer Vertiefung (26) führt.

3. Vorrichtung nach Anspruch 2, **dadurch gekennzeichnet, dass** die Vertiefung (26) eine radiale Nut bildet, deren Breite in Umfangsrichtung größer ist als die Breite eines Fingers der Membranfeder.

4. Vorrichtung nach Anspruch 1, **dadurch gekennzeichnet, dass** die Verformung durch Drängen von Material nach außen, in eine zu den Wälzkörpern (18) des Lagers entgegengesetzte Richtung erzeugt wird, wodurch die Ausbildung eines Vorsprungs (27, 127) entsteht.

5. Vorrichtung nach Anspruch 4, **dadurch gekennzeichnet, dass** die Verformung einen Vorsprung (27, 127) bildet, dessen Abmessungen geringer sind als die Abmessungen des Raumes in Umfangsrichtung, der zwei benachbarte Finger der Membranfeder voneinander trennt.

6. Vorrichtung nach Anspruch 5, **dadurch gekennzeichnet, dass** die Verformung einen Zahn (27) bildet, der in radialer Richtung eine längliche Gestalt aufweist.

7. Vorrichtung nach Anspruch 5, **dadurch gekennzeichnet, dass** die Verformung (127) eine schräge Klaue mit einer radialen Kante bildet, die parallel zu der Flanke (4a) eines Fingers (4) der Membranfeder (1) verläuft.

8. Vorrichtung nach einem der Ansprüche 5 bis 7, **dadurch gekennzeichnet, dass** die Vprsprünge (27, 127) unterschiedliche axiale Höhen aufweisen.

9. Vorrichtung nach einem der vorhergehenden Ansprüche, **dadurch gekennzeichnet, dass** die Ränder (26a) der Verformung parallel zu den Flanken (4a) des entsprechenden Fingers (4) verlaufen.

10. Vorrichtung nach einem der vorhergehenden Ansprüche, **dadurch gekennzeichnet, dass** die axiale Höhe der Verformung geringer ist als die halbe Dicke eines Fingers der Membranfeder.

11. Vorrichtung nach einem der vorhergehenden Ansprüche, **dadurch gekennzeichnet, dass** der umlaufende Ring zwei einander diametral gegenüberliegende Verformungen aufweist.

12. Vorrichtung nach einem der Ansprüche 1 bis 11, **dadurch gekennzeichnet, dass** der umlaufende Ring drei Verformungen aufweist, die in Umfangsrichtung gleichmäßig voneinander beabstandet sind.

13. Vorrichtung nach einem der vorhergehenden Ansprüche, **dadurch gekennzeichnet, dass** das Betätigungselement verschiebbar an einem Führungsrohr befestigt ist.

## Claims

1. Clutch-release device comprising a centrally holed diaphragm (1) which has a central part cut, by means of slits (5) into fingers (4) that point radially inwards, a thrust rolling bearing (13) and an operating element (14) mounted on a part which is distinct from the one supporting the diaphragm and in at least axial contact with the rolling bearing, the said rolling bearing comprising a rotating race (16), a radial portion of which bears against the internal end of the diaphragm fingers, a non-rotating race (17), a radial portion of which is in contact with the operating element, and a row of rolling bodies (18), **characterized in that** the rotating race, made of pressed sheet metal, on its radial portion in contact with the diaphragm comprises at least one axial deformation which is obtained without removing material, and the edges of which are capable of interacting with the flanks of one diaphragm finger, the deformation being smaller in size than the thickness of a diaphragm finger.

2. Device according to Claim 1, **characterized in that** the deformation is achieved by upsetting material inwards, towards the rolling bodies (18) of the said bearing, leading to the formation of an indentation (26).

3. Device according to Claim 2, **characterized in that** the indentation (26) forms a radial groove with a circumferential width greater than that of a diaphragm finger.

4. Device according to Claim 1, **characterized in that** the deformation is achieved by upsetting material outwards, away from the rolling bodies (18) of the said bearing, leading to the formation of a protrusion (27, 127).

5. Device according to Claim 4, **characterized in that** the deformation forms a protrusion (27, 127) smaller in size than the circumferential space separating two adjacent diaphragm fingers.

6. Device according to Claim 5, **characterized in that** the deformation consists of a pip (27) that is radially oblong in shape.

7. Device according to Claim 5, **characterized in that** the deformation (127) consists of an inclined lug with a radial corner edge parallel to the flank (4a) of a finger (4) of the diaphragm (1).

8. Device according to any one of Claims 5 to 7, **characterized in that** the protrusions (27, 127) have different axial heights.

9. Device according to any one of the preceding claims, **characterized in that** the edges (26a) of the deformation are parallel to the flanks (4a) of the corresponding finger (4).

10. Device according to any one of the preceding claims, **characterized in that** the deformation has an axial height that is less than half the thickness of a diaphragm finger.

11. Device according to any one of the preceding claims, **characterized in that** the rotating race comprises two diametrically opposed deformations.

12. Device according to any one of Claims 1 to 11, **characterized in that** the rotating race comprises three deformations uniformly spaced apart in the circumferential direction.

13. Device according to any one of the preceding claims, **characterized in that** the operating element is mounted so that it can slide on a guide tube.
